# EUROPEAN PATENT APPLICATION

(11) **EP 2 712 181 A1**
(43) Date of publication of application: **26.03.2014**
(21) Application number: 12785512.0
(22) Date of filing: 18.05.2012
(51) Int. Cl.: H04N 7/16, H04N 7/173

(54) **SIGNAL PROCESSING DEVICE AND PROGRAM**

(30) Priority: 19.05.2011 JP 2011112435
(71) Applicant: Japan Broadcasting Corporation, Shibuya-ku, Tokyo 150-8001 (JP)
(72) Inventor: HAMADA, Hiroyuki, Tokyo 157-8510 (JP); MITSUYA, Shigeaki, Tokyo 157-8510 (JP); MATSUMURA, Kinji, Tokyo 157-8510 (JP); BABA, Akitsugu, Tokyo 157-8510 (JP); FUJISAWA, Hiroshi, Tokyo 157-8510 (JP); TAKECHI, Masaru, Tokyo 157-8510 (JP); KANATSUGU, Yasuaki, Tokyo 157-8510 (JP)
(74) Representative: Fiesser, Gerold Michael
(86) International application number: PCT/JP2012/062763
(87) International publication number: WO 2012/157739

(57) **Abstract**

Provided are a signal processing device and a program which is capable of switching from a broadcast program to VOD, and during viewing of the VOD, if an emergency alert is superimposed upon a broadcast wave, displays the emergency alert under certain conditions, and which additionally is capable of displaying only VOD when viewing a recording. This signal processing device (4), on the basis of a signal from a remote control (R), upon switching to VOD content on the basis of an AIT in order to display the content upon a display (21), in response to detection of a boot flag for an emergency alert broadcast for a TMCC carrier included in a broadcast wave of a broadcasting station before the switching, displays the emergency alert broadcast included in the broadcast wave upon the display (21). In addition, the signal processing device (4) displays the emergency alert broadcast only if settings prioritizing display of the emergency alert broadcast have been made.

## Description

### TECHNICAL FIELD

The present invention relates to a signal processing device having a function of ensuring integration between broadcast and communication, and a program.

### BACKGROUND ART

There has conventionally been an emergency alert broadcast system that, in the occurrence of disaster such as earthquake or tsunami, the alert is quickly transmitted to viewers and listeners via a television broadcast and a radio broadcast.

For example, in the ISDB-T (Integrated Services Digital Broadcasting-Terrestrial, ARIB specification, STD-B31) system as the Japanese terrestrial digital television broadcast, a TMCC (Transmission and Multiplexing Configuration Control) carrier has a boot flag for an emergency alert broadcast. As for a terrestrial digital television receiver of the ISDB-T system, in the case where the receiver is in the OFF state, power is supplied to the receiver when the boot flag for an emergency alert broadcast is detected as being 1 (corresponding to "there is the boot control (there is an emergency alert broadcast)") by a transmission control signal receiving circuit for detecting the boot flag for an emergency alert broadcast stored in the TMCC carrier, thereby promoting the user of the receiver to view the emergency alert broadcast. A terrestrial digital television receiver of the ISDB-T system includes a transmission control signal receiving circuit for detecting the boot flag for an emergency alert broadcast stored in the TMCC carrier in the case where the receiver is in the OFF state. Thereby, when the boot flag for an emergency alert broadcast is detected as being 1 (corresponding to "there is the boot control (there is an emergency alert broadcast)"), power is supplied to the receiver, the receiver promotes the user of the receiver to view the emergency alert broadcast.

Patent Document 1 discloses that by utilizing such an emergency alert broadcast system, the earthquake early warning and the like can be transmitted quickly and certainly even when the timing synchronization is insufficient. In the invention of Patent Document 1, an AC signal including message information storing a code string representing the issue of an emergency alert broadcast and an early warning is extracted and the code string is subjected to a correlation calculation, and an alert is issued only when the flag is determined to be an early warning flag.

Research and development have been conducted for the realization of a broadcast/communication integrated services along with the digitization of the broadcast and the expansion of communication broadband services.

In this broadcast/communication integrated services, such a mode is assumed that a plurality of contents is distributed using different transmission routes of broadcast and communication, and the plurality of contents distributed is combined and displayed at a receiver such as a digital TV.

Patent Document 1: Japanese Unexamined Patent Application, Publication No. 2009-272954

### DISCLOSURE OF THE INVENTION

### Problems to be Solved by the Invention

In a signal processing device that can display the combined contents in this manner, for example, such a mode can be considered that a viewer selects a VOD (video on demand) from a menu displayed based on the application management information included in the broadcast wave while the viewer watches a broadcast program, and the viewer switches the broadcast program to a drama, etc. distributed from a VOD server.

If an emergency alert notifying the occurrence of an earthquake, etc. is superposed on the broadcast wave, the alert is displayed on the broadcast program as long as the viewer keeps watching the broadcast program; however, in the above mode in which the viewer has switched to the VOD, the emergency alert that would be superposed on the broadcast program is not displayed.

Here, when the emergency alert is superposed on the broadcast wave while the viewer watches the VOD after switching from the broadcast program, the viewer may desire the display of the emergency alert on the viewing screen of the VOD. When the viewer records the VOD and later watches the recorded video, the viewer may desire only the display of the VOD without the emergency alert information from the broadcast.

In view of this, an object of the present invention is to provide a signal processing device and a program, in which: when an emergency alert is superposed on the broadcast wave while the viewer watches a VOD by switching from the broadcast program, the display of the emergency alert is allowed under a certain condition; and only the VOD can be displayed when the viewer records the VOD and later watches the recorded video.

### Means for Solving the Problems

A signal processing device according to the present invention for processing a received signal and performing display, the signal processing device includes: operating unit that accepts an operation and outputting a signal based on the accepted operation; broadcast wave receiving unit that receives a broadcast wave including a broadcast content from a broadcasting station; communication content accessing unit that requests a communication content by accessing a content distribution server; communication content receiving unit that receives the requested communication content through the communication content accessing unit; image display controlling unit that displays on the display, the broadcast content received by the broadcast wave receiving unit and the communication content received by the communication content receiving unit; controlling unit that controls the image display control unit so that, upon receiving of a signal from the operating unit during display of the broadcast content on the display by the image display controlling unit, the communication content accessing unit accesses the content distribution server on the basis of application management information multiplexed on the broadcast content, the communication content receiving unit receives a menu that allows selection of the communication content, the communication content accessing unit requests from the content distribution server, the communication content selected from the menu, the communication content receiving unit receives the requested communication content, and the received communication content is displayed on the display after being switched from the displayed broadcast content; and signal monitoring unit that monitors the broadcast wave received by the broadcast wave receiving unit and detects an emergency signal. The image display controlling unit displays, while the communication content is displayed on the display after being switched from the broadcast content, an emergency alert broadcast included in the broadcast wave on the display in response to detection of the emergency signal included in the broadcast wave of a broadcasting station before the switch by the signal monitoring unit.

In this structure of the signal processing device according to the present invention, while the communication content is displayed on the display after being switched from the broadcast content on the basis of the application management information, the emergency alert broadcast included in the broadcast wave is displayed on the display in response to the detection of the emergency signal included in the broadcast wave of the broadcasting station before the switch on the basis of the signal from the operation unit.

Therefore, in the signal processing device according to the present invention, when the communication content (such as a VOD) is viewed after being switched from the broadcast content, the emergency alert can be displayed upon the detection of the emergency signal included in the broadcast wave of the broadcasting station before the switch.

The signal processing device further includes alert priority setting unit that puts priority on the display of the emergency alert broadcast. Only when the priority on the display of the emergency alert broadcast has been set by the alert priority setting unit, the image display controlling unit may display, while the communication content is displayed on the display after being switched from the broadcast content, the emergency alert broadcast included in the broadcast wave on the display in response to the detection of the emergency signal included in the broadcast wave of the broadcasting station before the switch by the signal monitoring unit.

In this structure of the signal processing device according to the present invention, the emergency signal (for example, TMCC signal) is detected and only when the priority has been put on the display of the emergency alert broadcast, the emergency alert broadcast is displayed on the display. Therefore, the signal processing device according to the present invention allows the display of the emergency alert broadcast only when the viewer desires the display of the emergency alert broadcast during the viewing of a communication content (for example, a VOD), and also allows only the display of the VOD if the priority is not put to the display of the emergency alert broadcast.

In the signal processing device, the image display controlling unit may control the controlling unit so that the content distribution server stops transmission of the communication content by having the controlling unit access the content distribution server through the communication content accessing unit when the emergency alert broadcast included in the broadcast wave is displayed on the display in response to the detection of the emergency signal by the signal monitoring unit.

In the structure of the signal processing device according to the present invention, when the communication content (for example, a VOD) is viewed after being switched from the broadcast content, the display of the communication content (for example, the VOD) can be stopped and the emergency alert can be displayed upon the detection of the emergency signal included in the broadcast wave of the broadcasting station before the switch.

Further, in the signal processing device, after detecting the emergency signal, the signal monitoring unit may further detect a state in which the emergency signal is not detected, and the image display controlling unit may control the controlling unit so that the transmission of the communication content stopped by the content distribution server is restarted by having the controlling unit access the content distribution server through the communication content accessing unit in response to the detection of the state in which the detection is not made by the signal monitoring unit.

In this structure of the signal processing device according to the present invention, when the emergency alert is displayed by stopping the display of the communication content (for example, the VOD), the display of the communication content (for example, the VOD) can be restarted automatically by the OFF of the emergency signal.

In the signal processing device, the controlling unit may control to restart the transmission of the communication content stopped by the content distribution server by accessing the content distribution server through the communication content accessing unit in response to a signal output from the operating unit having accepted the operation of restart.

In this structure of the signal processing device according to the present invention, the display of the communication content (for example, the VOD) can be restarted by the operation of the viewer when the emergency alert is displayed by stopping the display of the communication content (for example, the VOD).

A signal processing program according to the present invention is a signal processing program for processing a received signal and performing display, a computer includes: operating unit that accepts an operation and outputs a signal based on the accepted operation; broadcast wave receiving unit that receives a broadcast wave including a broadcast content from a broadcasting station; communication content accessing unit that requests a communication content by accessing a content distribution server; communication content receiving unit that receives the requested communication content through the communication content accessing unit; image display controlling unit that displays on the display, the broadcast content received by the broadcast wave receiving unit and the communication content received by the communication content receiving unit; controlling unit that controls the image display control unit so that: upon receiving of a signal from the operating unit during display of the broadcast content on the display by the image display controlling unit, the communication content accessing unit accesses the content distribution server on the basis of application management information multiplexed on the broadcast content; the communication content receiving unit receives a menu that allows selection of the communication content; the communication content accessing unit requests from the content distribution server, the communication content selected from the menu; the communication content receiving unit receives the requested communication content; and the received communication content is displayed on the display after being switched from the displayed broadcast content; and signal monitoring unit that monitors the broadcast wave received by the broadcast wave receiving unit and detects an emergency signal. The signal processing program makes the computer function as a signal processing device in which the image display controlling unit displays, while the communication content is displayed on the display after being switched from the broadcast content, an emergency alert broadcast included in the broadcast wave on the display in response to detection of the emergency signal included in the broadcast wave of a broadcasting station before the switch by the signal monitoring unit.

With such a structure, the signal processing program according to the present invention allows a computer to function as a signal processing device capable of, if a communication content (such as a VOD) is viewed after being switched from a broadcast content, displaying an emergency alert upon detection of an emergency signal included in a broadcast wave of a broadcasting station before the switch.

### Effects of the Invention

According to the present invention, if an emergency alert is superposed on a broadcast wave when a VOD is viewed after being switched from a broadcast program, the emergency alert can be displayed under a certain condition. Further, according to the present invention, when the VOD is recorded and viewed later, only the VOD can be displayed without the display of the emergency alert information from the broadcast.

### BRIEF DESCRIPTION OF THE DRAWINGS

FIG. 1 is an overall configuration diagram showing a broadcast/communication integrated system;
FIG. 2 is a diagram showing a transmission protocol stack of broadcast signals for digital broadcasting;
FIG. 3 is a block diagram showing a functional configuration of a signal processing device;
FIG. 4 is a diagram showing an example of an AIT described in an XML format;
FIG. 5 is a flowchart showing the process of a signal processing device according to an embodiment of the present invention;
FIG. 6 is a flowchart subsequent to FIG. 5. ;
FIG. 7 is a diagram showing an example of the display by a signal processing device according to an embodiment of the present invention; and
FIG. 8 is a diagram showing another example of the display by a signal processing device according to an embodiment of the present invention.

### EXPLANATION OF REFERENCE NUMERALS

- 1: broadcasting station
- 2: broadcasting antenna
- 3: service server
- 4: signal processing device
- 11: broadcast wave receiving unit
- 12: first separation unit
- 13: broadcast AIT acquisition unit
- 14: communication unit
- 15: second separation unit
- 16: communication AIT acquisition unit
- 17: application execution control unit
- 18: audio control unit
- 19: display control unit
- 20: speaker
- 21: display
- 22: memory
- 23: AIT storage unit
- 31: signal monitor unit
- 32: communication content access unit
- 33: communication content receiving unit
- 34: alert priority setting unit
- R: remote controller

### PREFERRED MODE FOR CARRYING OUT THE INVENTION

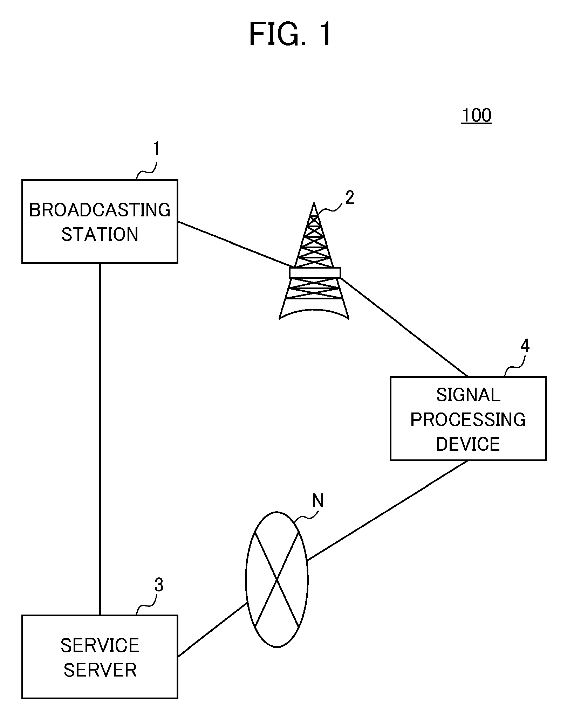

An embodiment of the present invention is hereinafter described with reference to the drawings. FIG. 1 is an overall configuration diagram of a broadcast/communication integrated system 100 according to the embodiment of the present invention. The broadcast/communication integrated system 100 is configured to include a broadcasting station 1, a broadcasting antenna 2, a service server 3 (distribution server), and a signal processing device 4. The broadcasting station 1 provides broadcast services through an Integrated Services Digital Broadcasting (ISDB) scheme, and the service server 3 provides communication services through a communication network N configured by the Internet, or the like; and the broadcast/communication integrated system 100 integrates both services into broadcast/communication integrated services to be provided to a user of the signal processing device 4.

The broadcasting station 1 includes typical broadcasting facilities (not illustrated) for digital broadcasting; the facilities are configured to include a program scheduling facility, a program delivering facility, and a transmitting facility.

The broadcasting station 1 produces content, event information (Event Information Table: EIT), application management information (Application Information Table: AIT) and the like, by the broadcasting facilities. The broadcasting station 1 multiplexes the content, the event information, the AIT and the like, into broadcast signals, by the broadcasting facilities. The broadcasting station 1 modulates the broadcast signals into broadcast waves, by the broadcasting facilities, and broadcasts the broadcast waves through the broadcasting antenna 2.

The content included in the broadcast waves to be broadcast from the broadcasting station 1 include: program content configured to include audio and video content to be broadcast in accordance with a broadcast schedule, emergency content such as Earthquake Early Warning that occurs asynchronously to the program content, and the like. If the contents included in the broadcast wave are not particularly distinguished, the contents are also referred to as broadcast contents in contrast to communication contents to be described later.

The event information includes meta-information regarding content, such as program content names, airdate and airtime of the program content, and descriptions of the program content. The event information is hereinafter referred to as an EIT.

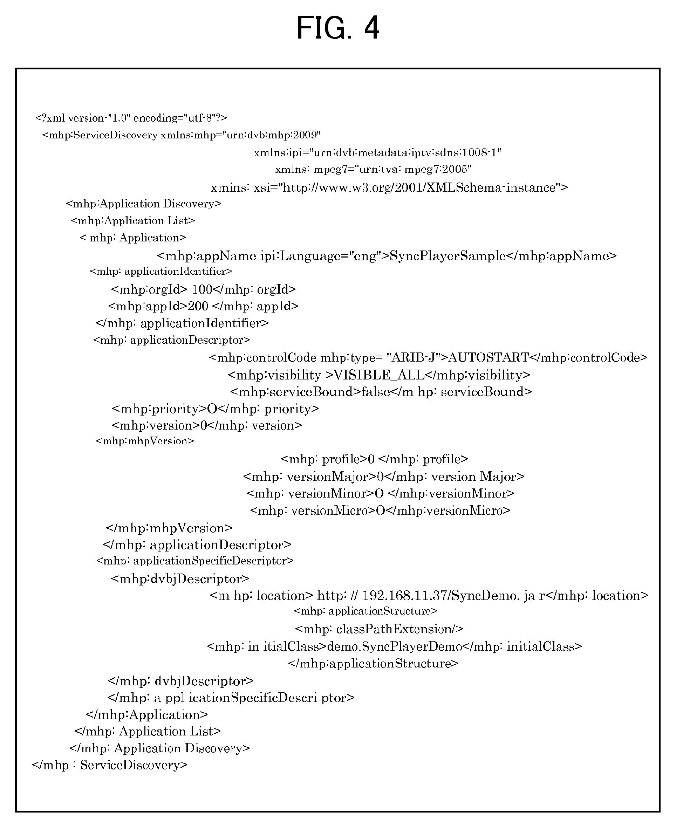

An AIT constitutes management information for managing a single or plurality of application programs (hereinafter described as an application), which are capable of providing content in conjunction with the program content to the signal processing device 4. An AIT includes a single or plurality of items of individual management information respectively corresponding to a single or plurality of applications, for the purpose of respectively managing the single or plurality of applications. The individual management information includes: an application ID for identifying an application; life cycle control information for controlling the life cycle of an application; and location information for indicating location of an application (see FIG. 4).

The content provided by an application includes: content linked with the program content; and content not linked with the program content. The content provided by an application is hereinafter referred to as application content. The contents not linked with the program contents are also referred to as communication contents in contrast to the aforementioned broadcast contents.

The broadcast signals are identical to broadcast signals of conventional digital broadcasting, and are defined according to the standard of ARIB (registered trademark; Association of Radio Industries and Businesses).

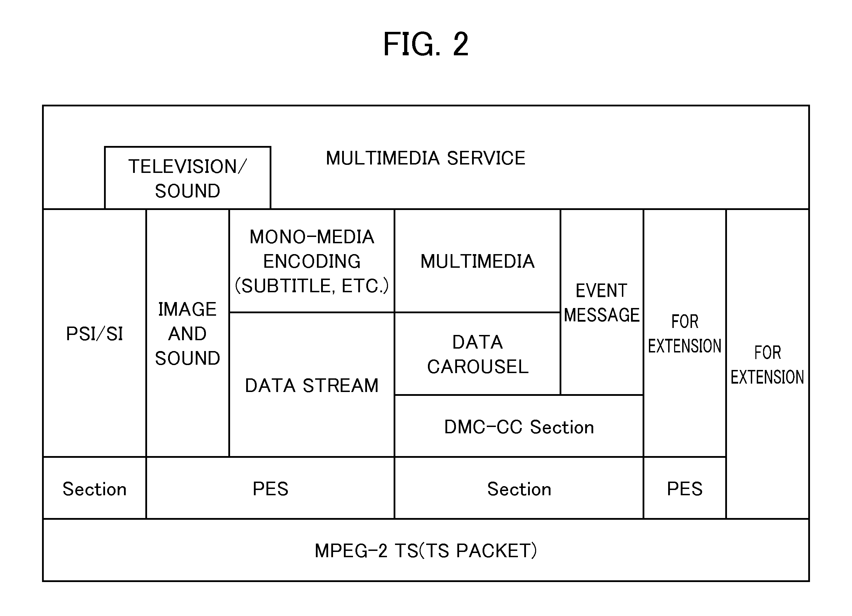

FIG. 2 is a diagram showing a transmission protocol stack of broadcast signals for digital broadcasting. As shown in FIG. 2, various data such as audio data and video data provided through digital broadcasting is stored in a TS packet (transport stream packet) defined according to the international standard of MPEG-2 Systems, and is transmitted by time-division multiplexing.

As shown in FIG. 2, PSI/SI (Program Specific Information/Service Information) is defined with regard to a Section in the TS packet. The PSI/SI includes information indicating a type of data stored in the TS packet or information indicating a type of content. The EIT is included in the SI.

Data transmission through a TS packet is classified into: a data transmission scheme using a Section; and a data transmission scheme (data stream transmission scheme) using a PES (Packetized Elementary Stream) packet.

The data transmission scheme using a Section includes a data carousel transmission scheme, and an event message transmission scheme.

The data carousel transmission scheme is a transmission scheme for repeatedly transmitting a single or plurality of items of data in a constant cycle, in which identification information for identifying individual data is assigned to individual data (module) transmitted through the transmission scheme. The data carousel transmission scheme is used for the purpose of causing the signal processing device 4 to acquire individual data at arbitrary timing.

The event message transmission scheme is a scheme for transmitting a trigger signal from the broadcasting station 1 to the signal processing device 4. The event message transmission scheme is used in a case of transmitting a message with a small volume of data from the broadcasting station 1 to the signal processing device 4.

The data stream transmission scheme is a transmission scheme for transmitting data as a stream, in which the transmitted data is contained in a PES packet. The data stream transmission scheme is used for transmitting real-time data such as image data, sound data and closed caption data, as well as data that requires synchronization with another stream.

In this regard, an AIT can be transmitted with various methods using a TS packet.

An AIT can be transmitted through the data carousel transmission scheme using a Section.

An AIT can be transmitted through the data carousel transmission scheme using a Section. In a case in which an AIT is transmitted through the data carousel transmission scheme, identification information is assigned to a module such that the signal processing device 4 can recognize the data as the AIT.

An AIT can be transmitted by multiplexing an image and sound of content into a PES.

An AIT can be stored in a TS packet through a description in binary representation or text representation in XML (Extensible Markup Language).

In the present embodiment, it is assumed that at least one of the abovementioned transmission schemes is defined in advance as a transmission scheme for an AIT.

The multimedia coding (Broadcast Markup Language: BML) is a standard defined in consideration of consistency with international standards based on xHTML defined by W3C (registered trademark, World Wide Web Consortium) by using ECMA Script based on Java Script (registered trademark) as a procedure-oriented language.

The service server 3 includes (although not illustrated): a content distribution server that distributes program content as well as content to be distributed to an application (application content); and an application distribution server that distributes various applications operating in the signal processing device 4.

The service server 3 is communicably connected to the facilities of the broadcasting station 1, and receives program content and metadata of the program content from the broadcasting station 1.

When the service server 3 receives an acquisition request for program content from the signal processing device 4, the service server 3 transmits the program content to the signal processing device 4.

The service server 3 stores applications, and when the service server 3 receives an acquisition request for an application from the signal processing device 4, the service server 3 transmits the application to the signal processing device 4. Furthermore, in a case in which an application is running in the signal processing device 4, the service server 3 transmits data of application content such as video data and audio data to the signal processing device 4.

The service server 3 stores an AIT and transmits the AIT multiplexed with the program content to the signal processing device 4. When the service server 3 receives an acquisition request for an AIT from the signal processing device 4, the service server 3 transmits the AIT to the signal processing device 4.

The signal processing device 4 performs a predetermined process on the program content received via communication with the service server 3 or via the broadcast from the broadcasting station 1, and outputs video data and audio data of the program content in synchronization. The signal processing device 4 acquires application on the basis of AIT, and executes the acquired application. Subsequently, the signal processing device 4 acquires video data, audio data, etc. of the application content from the service server 3 by the executed application, and outputs the data in integration with the video data and the audio data of the program content. The function of the signal processing device 4 is hereinafter described.

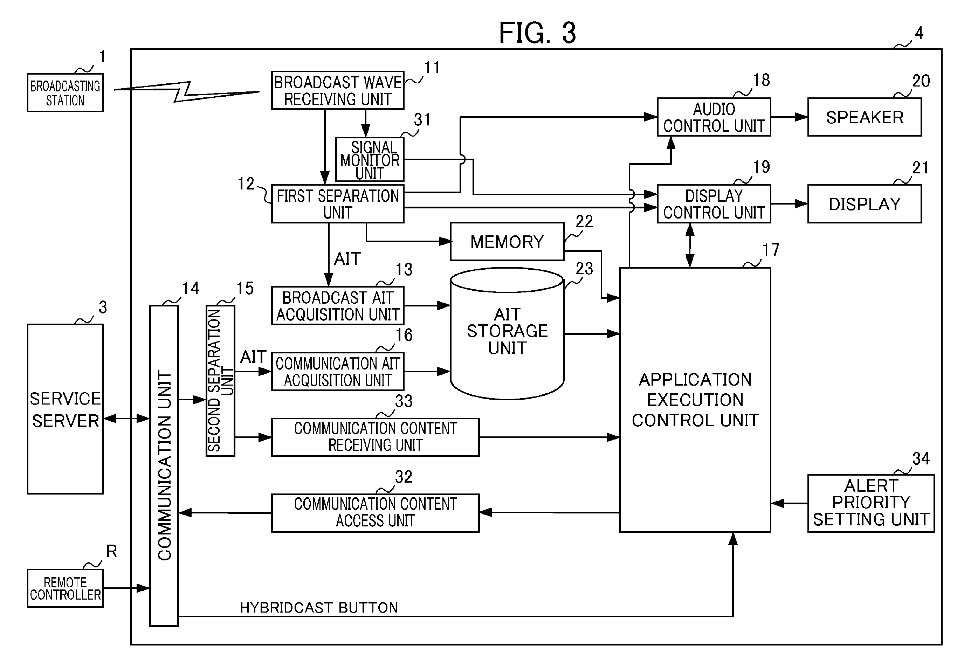

FIG. 3 is a block diagram showing a functional configuration of the signal processing device 4.

The signal processing device 4 includes a broadcast wave receiving unit 11 as broadcast wave receiving unit, a first separation unit 12, a broadcast AIT acquisition unit 13, a communication unit 14, a second separation unit 15, a communication AIT acquisition unit 16, an application execution control unit 17, an audio control unit 18, a display control unit 19 as image display controlling unit, a speaker 20, a display 21, a memory 22, an AIT storage unit 23, a signal monitor unit 31 as signal monitoring unit, a communication content access unit 32 as communication content accessing unit, a communication content receiving unit 33 as communication content receiving unit, and an alert priority setting unit 34 as alert priority setting unit. In the description of the function of the signal processing device 4, a VOD content is used as an example of the communication content, and a VOD distribution server (not shown) is used as an example of the service server 3 distributing the VOD content.

The broadcast wave receiving unit 11 receives broadcast waves broadcast through the broadcasting antenna 2 from the broadcasting station 1.

The first separation unit 12 demodulates the broadcast waves received by the broadcast wave receiving unit 11, and extracts broadcast signals, i.e. TS packets, from the broadcast waves. By referring to PSI/SI of the TS packet, the first separation unit 12 determines the type of data included in the TS packet, and extracts various data such as images, sound, an EIT, etc. The first separation unit 12 extracts an AIT by referring to a Section and a PES, in accordance with a predefined AIT transmission scheme.

Subsequently, in a case in which the data included in the PES of the TS packet is audio data, the first separation unit 12 outputs the audio data to the audio control unit 18. In a case in which the data included in the PES of the TS packet is video data, the first separation unit 12 outputs the video data to the display control unit 19.

The first separation unit 12 stores the extracted EIT and other various data into the memory 22. In the case of extracting the AIT, the first separation unit 12 outputs the extracted AIT to the broadcast AIT acquisition unit 13.

The broadcast AIT acquisition unit 13 acquires the AIT output from the first separation unit 12, and stores the AIT into the AIT storage unit 23.

The communication unit 14 is a communication interface for transmitting and receiving data with the service server 3 through the communication network N.

The second separation unit 15 determines the type of data received by the communication unit 14. In a case in which the received data is determined to be an AIT, the second separation unit 15 outputs the AIT to the communication AIT acquisition unit 16. In a case in which the received data is determined to be an application, the second separation unit 15 outputs the application to the application execution control unit 17.

In a case in which the received data is determined to be a TS packet, the second separation unit 15 extracts various data such as images, sound and an AIT from the TS packet. In a case in which an AIT is extracted, the second separation unit 15 outputs the AIT to the communication AIT acquisition unit 16; and in a case in which data other than an AIT is extracted, the second separation unit 15 outputs the data to the application execution control unit 17.

The communication AIT acquisition unit 16 acquires the AIT that is output from the second separation unit 15, and stores the AIT into the AIT storage unit 23.

The application execution control unit 17 acquires an application based on an AIT or an execution instruction from the user through the wireless remote controller R, and controls execution of the acquired application. The application execution control unit 17 outputs audio data of the application content, which is acquired from the service server 3 by executing the application, to the audio control unit 18, and outputs the video data of the application content, which is acquired from the service server 3, to the display control unit 19.

FIG. 4 is a diagram showing an example of an AIT described in an XML format. As described above, an AIT includes a single or plurality of items of individual management information respectively corresponding to a single or plurality of applications, for the purpose of respectively managing the single or plurality of applications.

More specifically, code described within a range from a tag <mhp: Application> to a tag </mhp: Application> shown in FIG. 4 correspond to individual management information regarding a single application. A plurality of items of individual management information can be described in the AIT by newly describing individual management information of other applications after the tag </mhp: Application>.

Among the codes corresponding to the individual management information, for example, the code corresponding to a tag <mhp:appId> represents the ID (identification information) of the application. The code corresponding to a tag <mhp:controlCode mhp:type="ARIB-J"> represents the life cycle control information of this application, and "AUTOSTART" depicted in FIG. 4 is the life cycle control information for automatically executing the application by the signal processing device 4. The code corresponding to a tag < mhp:location> represents the location information indicating the location of the application. As depicted in FIG. 4, the location information includes the address of the service server 3 as the location of the application. Note that in the location information, the signal processing device 4 may be specified as the location of the application.

The application execution control unit 17 monitors the AIT storage unit 23 and, if AIT is newly stored, refers to the control information related to the life cycle described in this AIT. If the control information related to the life cycle indicates "automatic execution", the application execution control unit 17 acquires the application from the service server 3 via the communication unit 14 and the second separation unit 15 with the location information described in AIT used as the acquisition destination of the application and then, executes the acquired application. In this case, the application is executed automatically without being explicitly instructed by a user of the signal processing device 4.

The application execution control unit 17 accepts the execution instruction of the application from the user of the signal processing device 4 via a remote controller R. For example, the remote controller R has Hybridcast (registered trademark) buttons, and in response to the pressing of the Hybridcast button by the user of the signal processing device 4, the application execution control unit 17 accepts the instruction of executing the menu screen for accepting the selection of the application to be executed. In response to the acceptance of the instruction of executing the menu screen, the application execution control unit 17 identifies the AIT of the application that can be executed, with reference to the AIT storage unit 23. Then, the application execution control unit 17 outputs the video data constituting the menu screen on which the application corresponding to the identified AIT can be selected, to the display control unit 19 and displays this menu screen on the display 21. In the case where the operation of selecting the application has been accepted via the remote controller R from the user of the signal processing device 4, the application execution control unit 17 acquires the application with reference to the location information of the application described in the AIT and executes the application.

The application causes the application execution control unit 17 to acquire the video data and the audio data of the application content from the service server 3. The application execution control unit 17 outputs the audio data of the application content acquired by the application to the audio control unit 18, and outputs the video data of the application content acquired by the application to the display control unit 19. If the application is the application providing the application content linked with the program content, the video data and the audio data of the application content are displayed on the display 21 while linking with the video data and the audio data for the program content.

The application execution control unit 17 monitors the AIT storage unit 23 and if the AIT containing the individual management information corresponding to the application in execution is newly stored in the AIT storage unit 23, the application in execution is controlled based on the life cycle control information included in this individual management information. For example, when the life cycle control information of the application is the one indicating "end", the application is ended.

The audio control unit 18 outputs the audio data output from the first separation unit 12 to the speaker 20 in synchronization with the video data displayed and controlled by the display control unit 19. If the audio data output from the application execution control unit 17 can be synchronized with the video data displayed and controlled by the display control unit 19, the audio control unit 18 outputs the audio data to the speaker 20 in synchronization with the video data.

The display control unit 19 displays the video data output from the first separation unit 12 on the display 21 in synchronization with the audio data output and controlled by the audio control unit 18. If the video data output from the application execution control unit 17 can be synchronized with the audio data output and controlled by the audio control unit 18, the display control unit 19 displays the video data on the display 21 in synchronization with this audio data.

The memory 22 stores the meta-information of the program content such as EIT, and other various information.

The AIT storage unit 23 stores the AIT acquired by the broadcast AIT acquisition unit 13 and the communication AIT acquisition unit 16.

The signal monitor unit 31 monitors the broadcast wave received by the broadcast wave receiving unit 11, and detects an emergency signal. Specifically, the signal monitor unit 31 monitors a TMCC carrier, and when the boot flag for an emergency alert broadcast stored in the TMCC carrier is 1, detects as an emergency signal.

The communication content access unit 32 transmits the request of acquiring the VOD content for receiving the VOD content from the VOD distribution server.

The communication content receiving unit 33 receives the VOD content transmitted from the VOD distribution server.

The application execution control unit 17 as the controlling unit controls based on signals from the remote controller R as the operating unit, to switch from the broadcast content displayed on the display 21 to the communication content by the display control unit 19.

Specifically, the application execution control unit 17 accesses the VOD distribution server by the communication content access unit 32 on the basis of the application management information (for example, the location information for accessing the VOD distribution server included in the aforementioned AIT) multiplexed on the broadcast program upon acceptance of the signal from the remote controller R while the broadcast program is displayed on the display 21 by the display control unit 19, receives the menu for allowing the selection of a VOD from the communication content receiving unit 33, and controls the display control unit 19 to display the received menu on the display 21 by the display control unit 19. Next, upon the receiving of the signal from the remote controller R indicating that the selection has been made from the menu displayed by the display control unit 19, the application execution control unit 17 requests the selected VOD content from the VOD distribution server through the communication content access unit 32, receives the requested VOD content through the communication content receiving unit 33, and controls the display control unit 19 to switch to the received VOD content from the broadcast program displayed by the display control unit 19 on the display 21.

While the VOD content is displayed on the display 21 after being switched from the broadcast program, the emergency alert broadcast included in the broadcast wave is displayed on the display 21 in response to the detection of the emergency signal included in the broadcast wave of the broadcasting station before the switch by the signal monitor unit 31. For example, the display control unit 19 controls to switch the display of the broadcast program from the broadcasting station of a channel A to the display of the VOD content from the VOD distribution server. In this case, the signal monitor unit 31 monitors an emergency signal (TMCC carrier) of the broadcasting station of the channel A while the display control unit 19 displays the VOD content on the display 21. When the boot flag for the emergency alert broadcast stored in the TMCC carrier has been detected as 1 by the signal monitor unit 31, the application execution control unit 17 displays the emergency alert broadcast included in the broadcast wave of the broadcasting station of the channel A on the display 21.

The alert priority setting unit 34 performs the setting for putting priority on the display of the emergency alert broadcast. Specifically, based on the signal from the remote controller R indicating the priority on the display of the emergency alert broadcast, the alert priority setting unit 34 sets the flag for putting priority on the display of the emergency alert broadcast to 1 and stores in the memory 22. The alert priority setting unit 34 may be a switch (not shown) indicating the priority on the display of the emergency alert broadcast. Only when the priority on the display of the emergency alert broadcast has been set by the alert priority setting unit 34, the display control unit 19 displays, while the VOD is displayed on the display 21 after being switched from the broadcast program, the emergency alert broadcast included in the broadcast wave on the display 21 in response to the detection of the TMCC signal included in the broadcast wave of the broadcasting station before the switch by the signal monitor unit 31. On the contrary, when the priority on the display of the emergency alert broadcast has not been set by the alert priority setting unit 34, the display control unit 19 does not display, while the VOD is displayed on the display 21 after being switched from the broadcast program, the emergency alert broadcast included in the broadcast wave on the display 21 even in the detection of the TMCC signal included in the broadcast wave of the broadcasting station before the switch by the signal monitor unit 31.

When the emergency alert broadcast included in the broadcast wave is displayed on the display 21 in response to the detection of the emergency signal by the signal monitor unit 31, the display control unit 19 controls the application execution control unit 17 to stop the transmission of the VOD content. Specifically, the display control unit 19 controls the application execution control unit 17 so that the application execution control unit 17 transmits the request of stopping the VOD content to the VOD distribution server through the communication content access unit 32. Note that the display control unit 19 may have a function of performing a time-shift reproduction of storing the received VOD content for a certain time without stopping the receiving of the VOD content and restarting the display of the VOD content from the stopped point.

After detecting an emergency signal (ON state), the signal monitor unit 31 further detects the state where the emergency signal is not detected (OFF state). The display control unit 19 controls the application execution control unit 17 to restart the stopped transmission of the VOD content in response to the detection of the OFF state by the signal monitor unit 31. Specifically, the display control unit 19 controls the application execution control unit 17 so that the application execution control unit 17 transmits the request of restarting the VOD content to the VOD distribution server through the communication content access unit 32.

The application execution control unit 17 controls to restart the stopped transmission of the communication content in response to the signal output from the remote controller R having accepted the operation of restart. For example, the application execution control unit 17 transmits the request of restarting the VOD content to the VOD distribution server through the communication content access unit 32 in response to the restart signal from the remote controller R.

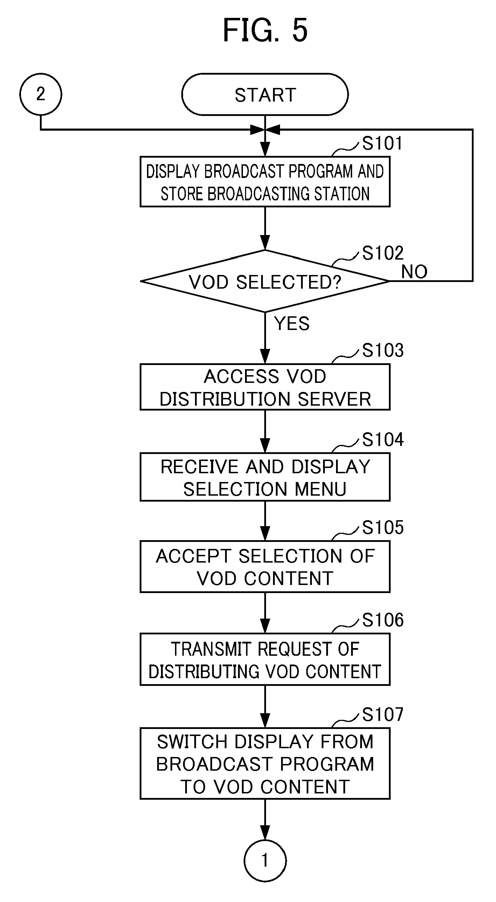

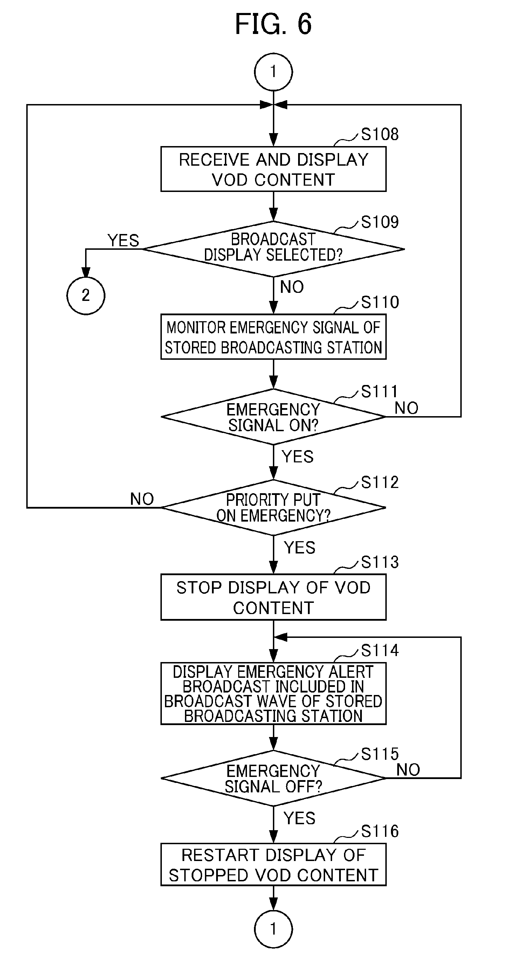

FIG. 5 is a flowchart showing the process of the signal processing device 4 according to an embodiment of the present invention. FIG. 6 is a flowchart subsequent to FIG. 5. For example, the process in the case where the signal processing device 4 displays the broadcast program of the broadcasting station of the channel A is depicted.

In Step S101, the signal processing device 4 (display control unit 19) displays the broadcast program of the channel A on the display 21. The signal processing device 4 stores the channel A in the memory 22.

Next, in Step S102, the signal processing device 4 (application execution control unit 17) determines whether the VOD has been selected or not. More specifically, the signal processing device 4 determines whether a switch signal from the remote controller R, which represents that a viewer has switched from the broadcast program to the VOD, has been detected or not. In a case in which the determination is YES, the signal processing device 4 advances this process to Step S103; and in a case in which the determination is NO, the signal processing device 4 advances this process to Step S101.

Next, in Step S103, the signal processing device 4 (communication content access unit 32) accesses the VOD distribution server of the broadcasting station of the channel A. More specifically, the signal processing device 4 accesses the VOD distribution server on the basis of the location for accessing the VOD distribution server included in the AIT from the broadcasting station of the channel A.

Next, in Step S104, the signal processing device 4 (the application execution control unit 17, the communication content receiving unit 33, and the display control unit 19) receives and displays the selection menu for allowing the selection of the content from the VOD distribution server. More specifically, the signal processing device 4 sets a region to display the selection menu in the screen displaying the broadcast program, and displays the received selection menu.

Next, in Step S105, the signal processing device 4 (application execution control unit 17) accepts the selection of the VOD content. More specifically, the signal processing device 4 accepts the selection signal from the remote controller R, which represents that the viewer has selected the VOD content from the selection menu.

Next, in Step S106, the signal processing device 4 (communication content access unit 32) transmits the request of distributing the VOD content to the VOD distribution server.

Next, in Step S107, the signal processing device 4 (the application execution control unit 17 and the display control unit 19) switches the display from the broadcast program to the VOD content.

Next, in Step S108, the signal processing device 4 (the application execution control unit 17, the communication content receiving unit 33, and the display control unit 19) receives the VOD content distributed from the VOD distribution server and displays the VOD content.

Next, in Step S109, the signal processing device 4 (application execution control unit 17) determines whether the broadcast display has been selected or not. More specifically, the signal processing device 4 determines whether the switch signal from the remote controller R, which represents that the viewer has switched from the VOD to the broadcast program, has been detected or not. In a case in which the determination is YES, the signal processing device 4 advances the process to Step S101 and in a case in which the determination is NO, the signal processing device 4 advances the process to Step S110.

Next, in Step S110, the signal processing device 4 (signal monitor unit 31) monitors an emergency signal of the broadcasting station (channel A) stored in Step S101. More specifically, the signal processing device 4 monitors the boot flag for the emergency alert broadcast stored in the TMCC carrier of the broadcasting station (channel A) stored in Step S101.

Next, in Step S111, the signal processing device 4 (the signal monitor unit 31 and the display control unit 19) determines whether the boot flag for the emergency alert broadcast is 1 or not. In a case in which the determination is YES, the signal processing device 4 advances the process to Step S112; and in a case in which the determination is NO, the signal processing device 4 advances the process to Step S108.

In Step S112, the signal processing device 4 (application execution control unit 17) determines whether the setting for putting priority on the display of the emergency alert broadcast has been done or not. More specifically, with reference to the memory 22, the signal processing device 4 determines whether the flag for putting priority on the display of the emergency alert broadcast has been set to 1 or not. Additionally, based on the signal from the remote controller R, which represents that the viewer has done the setting for putting priority on the display of the emergency alert broadcast, the signal processing device 4 (alert priority setting unit 34) sets the flag for putting priority on the display of the emergency alert broadcast to 1 in the memory 22. In a case in which the determination is YES, the signal processing device 4 (application execution control unit 17) advances the process to Step S113; and in a case in which the determination is NO, the signal processing device 4 advances the process to Step S108.

In Step S113, the signal processing device 4 (the application execution control unit 17, the display control unit 19, and the communication content access unit 32) stops the display of the VOD content. More specifically, in order to stop the display of the VOD content, the signal processing device 4 transmits the request of stop to the VOD distribution server.

Next, in Step S114, the signal processing device 4 (display control unit 19) displays the emergency alert broadcast included in the broadcast wave of the broadcasting station (channel A) stored in Step S101 on the display 21.

Next, in Step S115, the signal processing device 4 (the signal monitor unit 31 and the display control unit 19) determines whether the emergency signal is OFF or not. More specifically, the signal processing device 4 monitors the boot flag for the emergency alert broadcast stored in the TMCC carrier of the broadcasting station (channel A) stored in Step S101, and determines whether the boot flag for the emergency alert broadcast is 0 or not. In a case in which the determination is YES, the signal processing device 4 advances the process to Step S116; and in a case in which the determination is NO, the signal processing device 4 advances the process to Step S114.

Next, in Step S116, the signal processing device 4 (the application execution control unit 17 and the display control unit 19) restarts the stopped display of the VOD content. More specifically, in order to restart the display of the VOD content, the signal processing device 4 transmits the request of restart to the VOD distribution server, and advances the control to Step S108.

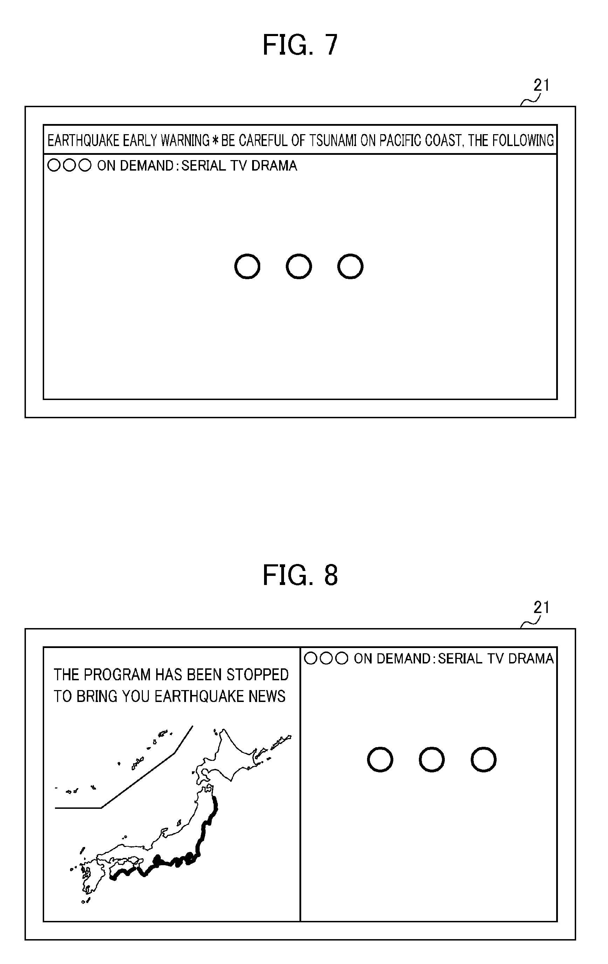

FIG. 7 is a diagram showing an example of the display by the signal processing device 4 according to an embodiment of the present invention. In the example of the display depicted in FIG. 7, when the VOD is displayed on the display 21 after being switched from the broadcast program, the emergency alert broadcast included in the broadcast wave is displayed on the display 21 while the VOD content is displayed, in response to the detection of the emergency signal included in the broadcast wave of the broadcasting station before the switch. In other words, this is the example of the display corresponding to the process in Step S114.

FIG. 8 is a diagram showing another example of the display by the signal processing device 4 according to an embodiment of the present invention. In the example depicted in FIG. 8, when the VOD is displayed on the display 21 after being switched from the broadcast program, the signal processing device 4 divides the screen on the display 21 and displays the VOD content on one display screen and displays the emergency alert broadcast included in the broadcast wave on the other display screen, in response to the detection of the emergency signal included in the broadcast wave of the broadcasting station before the switch.

According to this embodiment, when the VOD is displayed on the display 21 after being switched from the broadcast program based on AIT on the basis of the signal from the remote controller R, the signal processing device 4 displays the emergency alert broadcast included in the broadcast wave on the display 21, in response to the detection of the boot flag for the emergency alert broadcast of the TMCC carrier included in the broadcast wave of the broadcasting station before the switch. Further, the signal processing device 4 displays the emergency alert broadcast on the display 21 only when the setting for putting priority on the display of the emergency alert broadcast has been done. Moreover, the signal processing device 4 displays the emergency alert after stopping the display of the VOD content, and automatically restarts the display of the stopped VOD content by turning off the emergency signal. The signal processing device 4 restarts the display of the stopped VOD content by the operation of the viewer.

Therefore, when the VOD content is viewed after being switched from the broadcast program, the signal processing device 4 can display the emergency alert upon the detection of the emergency signal included in the broadcast wave of the broadcasting station before the switch, and further, if the setting for putting priority on the display of the emergency alert broadcast is not done, only the VOD can be displayed in the recorded video.

In this example, the emergency alert broadcast is transmitted by the TMCC carrier; however, the present invention is not limited thereto. The emergency alert broadcast may be transmitted through, for example, multiplexing on the AC (Auxiliary Channel) carrier or TS (Event message).

The embodiment of the present invention has been described above; however, the present invention is not limited to the above embodiment. The effects described in the embodiment of the present invention are merely cited as most preferred effects achieved by the present invention; the effects according to the present invention are not limited to those described in the embodiment of the present invention.

Although this example has mainly described the structure and the operation of the signal processing device, the present invention is not limited thereto; the present invention may be structured as a method having each component for displaying, when a VOD is viewed after being switched from the broadcast program and an emergency alert is superposed on the broadcast wave, the emergency alert under a certain condition, and a program.

A program for achieving the function of the signal processing device may be recorded in a computer-readable recording medium, and the program recorded in this recording medium may be read in a computer system, so that the program is executed.

The "computer system" as used herein includes an OS and hardware such as peripheral devices. The "computer-readable recording medium" refers to a storage device such as a portable medium including a flexible disk, a magneto-optical disk, ROM, CD-ROM, etc. and a hard disk or the like built in a computer system.

Furthermore, the "computer-readable recording medium" may include a medium for dynamically retaining a program for a short period of time, e.g. for transmitting a program through a network such as the Internet or a communication line such as a telephone line, or may be a medium for retaining a program for a certain period of time, e.g. volatile memory in a computer system serving as a server or a client in such a case. Moreover, the program may be a program for implementing a part of the functions, or may be a program for implementing the functions by combining programs already recorded in a computer system.

## Claims

1. A signal processing device for processing a received signal and performing display, the signal processing device comprising:
operating unit that accepts an operation and outputting a signal based on the accepted operation;
broadcast wave receiving unit that receives a broadcast wave including a broadcast content from a broadcasting station;
communication content accessing unit that requests a communication content by accessing a content distribution server;
communication content receiving unit that receives the requested communication content through the communication content accessing unit;
image display controlling unit that displays on the display, the broadcast content received by the broadcast wave receiving unit and the communication content received by the communication content receiving unit;
controlling unit that controls the image display control unit so that:
upon receiving of a signal from the operating unit during display of the broadcast content on the display by the image display controlling unit, the communication content accessing unit accesses the content distribution server on the basis of application management information multiplexed on the broadcast content; the communication content receiving unit receives a menu that allows selection of the communication content; the communication content accessing unit requests from the content distribution server, the communication content selected from the menu; the communication content receiving unit receives the requested communication content; and the received communication content is displayed on the display after being switched from the displayed broadcast content; and
signal monitoring unit that monitors the broadcast wave received by the broadcast wave receiving unit and detects an emergency signal, wherein
the image display controlling unit displays, while the communication content is displayed on the display after being switched from the broadcast content, an emergency alert broadcast included in the broadcast wave on the display in response to detection of the emergency signal included in the broadcast wave of a broadcasting station before the switch by the signal monitoring unit.

2. The signal processing device according to Claim 1, further comprising
alert priority setting unit that puts priority on the display of the emergency alert broadcast, wherein
only when the priority on the display of the emergency alert broadcast has been set by the alert priority setting unit, the image display controlling unit displays, while the communication content is displayed on the display after being switched from the broadcast content, the emergency alert broadcast included in the broadcast wave on the display in response to the detection of the emergency signal included in the broadcast wave of the broadcasting station before the switch by the signal monitoring unit.

3. The signal processing device according to Claim 1 or 2, wherein
the image display controlling unit controls the controlling unit so that the content distribution server stops transmission of the communication content by having the controlling unit access the content distribution server through the communication content accessing unit when the emergency alert broadcast included in the broadcast wave is displayed on the display in response to the detection of the emergency signal by the signal monitoring unit.

4. The signal processing device according to Claim 3, wherein:
after detecting the emergency signal, the signal monitoring unit further detects a state in which the emergency signal is not detected; and
the image display controlling unit controls the controlling unit so that the transmission of the communication content stopped by the content distribution server is restarted by having the controlling unit access the content distribution server through the communication content accessing unit in response to the detection of the state in which the detection is not made by the signal monitoring unit.

5. The signal processing device according to Claim 3 or 4, wherein
the controlling unit controls to restart the transmission of the communication content stopped by the content distribution server by accessing the content distribution server through the communication content accessing unit in response to a signal output from the operating unit having accepted the operation of restart.

6. A signal processing program for processing a received signal and performing display, a computer comprising:
operating unit that accepts an operation and outputs a signal based on the accepted operation;
broadcast wave receiving unit that receives a broadcast wave including a broadcast content from a broadcasting station;
communication content accessing unit that requests a communication content by accessing a content distribution server;
communication content receiving unit that receives the requested communication content through the communication content accessing unit;
image display controlling unit that displays on the display, the broadcast content received by the broadcast wave receiving unit and the communication content received by the communication content receiving unit;
controlling unit that controls the image display control unit so that: upon receiving of a signal from the operating unit during display of the broadcast content on the display by the image display controlling unit, the communication content accessing unit accesses the content distribution server on the basis of application management information multiplexed on the broadcast content; the communication content receiving unit receives a menu that allows selection of the communication content; the communication content accessing unit requests from the content distribution server, the communication content selected from the menu; the communication content receiving unit receives the requested communication content; and the received communication content is displayed on the display after being switched from the displayed broadcast content; and
signal monitoring unit that monitors the broadcast wave received by the broadcast wave receiving unit and detects an emergency signal, wherein
the signal processing program makes the computer function as a signal processing device in which the image display controlling unit displays, while the communication content is displayed on the display after being switched from the broadcast content, an emergency alert broadcast included in the broadcast wave on the display in response to detection of the emergency signal included in the broadcast wave of a broadcasting station before the switch by the signal monitoring unit.
